# EUROPEAN PATENT APPLICATION

(11) **EP 4 685 039 A1**
(43) Date of publication of application: **28.01.2026**
(21) Application number: 25190992.5
(22) Date of filing: 22.07.2025
(51) Int. Cl.: B62J 11/04

(54) **BOTTLE HOLDER FOR BICYCLES**

(30) Priority: 22.07.2024 IT 202400016972
(71) Applicant: ELITE S.R.L., 35014 Fontaniva (Padova) (IT)
(72) Inventor: SARTORE, Andrea, 35014 Fontaniva (PD) (IT)
(74) Representative: Milan, Guglielmo

(57) **Abstract**

Bottle holder (1) for bicycles defining a seat (2) for receiving a bottle along an insertion axis (X), the bottle holder comprising a retaining cage (3) with a reticular structure including a plurality of interconnected sections (30), the retaining cage (3) defining an axial opening (4) for inserting the bottle into the seat, and at least one roller (R1, R2, R3) for sliding the bottle into the seat along the insertion axis through the axial opening, the plurality of interconnected sections comprising at least one support section (31, 32, 33) extending tangentially to the periphery of the axial opening in a respective plane (P1, P2) transverse to the insertion axis, wherein the at least one support section defines a respective rotation axis (Y1, Y2, Y3) at which the at least one roller is rotatably associated, thereby enabling the roller to roll on the bottle due to an interaction between the bottle and the roller during the insertion of the bottle through the axial opening, wherein the retaining cage and the rotation axis of the at least one roller are in a single body.

## Description

The present invention relates to a bottle holder for bicycles.

Such devices are commonly used to support a bottle or a similar container.

In some of the known solutions, the device comprises a main body, fastened to the bicycle frame, to which is associated a supporting part, consisting of a wire frame defining a housing for the bottle. Inserting the bottle into the relative housing causes a slight widening of the frame, so that the former can be retained within the latter, exploiting the elastic reaction of the metal wire. An embodiment of the type mentioned is, for example, described in US5392971A.

A major drawback of the known devices of the type mentioned above is that inserting the bottle into the relative housing leads to wear of the bottle surface and deterioration of the graphics that are commonly displayed on the surface thereof. This drawback is aggravated by the fact that, especially when riding the bicycle, the bottle is inserted into the relative housing starting from a direction that does not coincide with the axis of the housing, and thus the bottle tends to rub against the mouth of the housing before reaching the correct orientation for insertion.

Furthermore, in the known devices of the type mentioned above, the supporting part made of wire is of poor structural strength. In this respect, the incorrect insertion of the bottle into the above0-mentioned frame can result in permanent deformation of the latter.

In another known solution, described in US5170981A, instead of a metal wire frame, an annular element is rigidly associated with the main body of the device, within which a bottle can be inserted. The lower end of the main body is associated with a support base for the bottle, while the upper end of the same body has a switchable stop element.

This known device also has the drawback of wearing out the bottle surface and deteriorating the graphics thereof. Furthermore, the known device mentioned above is relatively inconvenient to use, especially while riding the bicycle, as it requires the cyclist to perform a specific manual operation on the stop element in order to lock and/or unlock the bottle with respect to the device.

A further known solution is described in TWM247481U, which discloses a bottle holder comprising an elastic spiral wrapped about the frame structure of the bottle holder. When the bottle is inserted, the elastic spiral laterally adheres to the bottle to prevent it from being ejected due to impacts while riding.

The present invention proposes to solve at least in part one or more of the above-mentioned drawbacks, and in particular to make a bottle holder for bicycles, which is simple to construct and assemble, easy to use and functions reliably over time. These and still other aims, which will become clearer below, are achieved according to the present invention by a bottle holder for bicycles having one or more of the features mentioned in the appended claims.

Such a bottle holder preferably defines a seat for housing a bottle along an insertion axis and preferably comprises a retaining cage, in particular with a reticular structure. The retaining cage preferably includes a plurality of interconnected sections and preferably defines an axial opening for inserting the bottle into the seat.

According to an important aspect of the invention, the bottle holder comprises at least one roller for sliding the bottle into the seat along the insertion axis through the axial opening.

In a preferred example of the invention, the plurality of interconnected sections comprises at least one support section which, preferably, extends tangentially to the periphery of the axial opening, in particular in a respective plane transverse to the insertion axis. Such an at least one support section preferably defines a respective rotation axis at which the at least one roller is rotatably associated, thereby enabling the roller to roll on the bottle due to an interaction between the bottle and the roller during the insertion of the bottle through the axial opening. Preferably the retaining cage and the rotation axis of the at least one roller are in a single body.

It will be appreciated that the rolling of the roller on the bottle during the insertion of the bottle through the axial opening preserves the surface integrity of the bottle and the relative graphics from wear and deterioration due to the sliding of the bottle against the edges of the opening of the bottle holder. This advantageous effect is achieved with a constructively simple, durable and lightweight solution thanks to the fact that the roller is directly supported by the reticular structure of the retaining cage, which simultaneously fulfils the function of the peripheral frame of the bottle holder and also facilitates the grasping of the bottle thanks to the gripping surface of the bottle which is exposed through the reticular structure.

Furthermore, the creation of the retaining cage and rotation axis in a single body guarantees superior structural strength, ensures dimensional accuracy and optimal roller alignment, reduces the number of components, thus simplifying production and assembly, and increases the overall reliability of the device.

It should be noted that, in the present context, 'reticular structure' preferably means a plurality of interconnected sections suitable for defining a peripheral frame according to free geometric patterns.

It should be noted that, in the present context, 'plane transverse to the insertion axis' means either a plane which is inclined with respect to the insertion axis or (preferably) a plane which is substantially perpendicular to the insertion axis.

It should be noted that, in the present context, 'rotation axis' means both a geometric entity and the physical entity corresponding to the geometric entity. Preferably, 'rotation axis' refers to a portion of the support section and more specifically the portion on which the roller is mounted.

With the term 'interaction' referring to two distinct bodies or objects, it will be understood that the two bodies or objects are in contact with each other during the phases of interaction between the two bodies or objects. Such contact is in particular due to a relative movement between the two bodies or objects.

By the term 'single body' referring to two distinct objects or entities, it will be understood in the context of the present invention that the two objects or entities are joined with structural continuity, preferably achieved by machining the two objects or entities together. The machining can, for example, take place by moulding or extrusion. For example, two sections of a single elongate element that nevertheless differ in structural or dimensional features are considered formed as a single body.

The present invention may also have one or more of the following preferred features in addition to those previously mentioned.

The bottle holder preferably comprises an anchoring part connected to the retaining cage and configured to fasten the bottle holder to a bicycle frame as well as, preferably, a bearing base connected to the anchoring part and configured to bear a bottom portion of the bottle in particular at an axial end of the seat opposite the axial opening.

In a preferred example, the retaining cage and the rotation axis of each roller are in a single body which, preferably, also integrates the anchoring part and/or the bearing base. These features increase the ease of construction and use of the device, as well as its structural robustness and reliability over time.

In some embodiments, the at least one support section has an elongate shape, preferably rectilinear. In fact, such a conformation facilitates the rotation of the roller on the respective support section. Of course, it is also contemplated that, in some embodiments, the at least one support section may extend along a circular trajectory.

Preferably, the at least one support section has a rectilinear elongate shape to define the respective rotation axis. This configuration allows the roller rotation to be supported with a simple and reliable structure.

Preferably, the at least one roller has a radial clearance with respect to the respective support section. Advantageously, such radial clearance guarantees smooth roller rotation even in the presence of dimensional imperfections or deformations due to use. In some embodiments, the radial clearance can be, for example, greater than or equal to 0.1 mm and preferably less than or equal to 2 mm.

The term 'radial clearance' referring to a rotating element with respect to a relative support means that an inner surface of the rotating element, when mounted on the support, is not entirely in contact with a corresponding outer surface of the support, one or more portions being defined in which there is no contact between said surfaces.

Preferably, the at least one support section comprises at least one shoulder configured to limit the axial displacement of the respective roller. Even more preferably, the at least one support section comprises two shoulders between which the respective roller is positioned. In some preferred embodiments, the at least one roller is housed in a seat or groove formed in the respective support section. Advantageously, these features prevent the axial slippage of the roller and limit the entry of contamination in the roller-support interface, while maintaining rotation efficiency.

Preferably, the at least one support section is a rigid element. Preferably, the at least one support section maintains a stable geometric configuration. Preferably, the rotation axis of the at least one roller is constrained in a fixed position. Preferably, the at least one support section is a self-supporting structural element. Advantageously, these features guarantee structural stability, a constant insertion path for the bottle and optimal friction reduction.

In a more preferred example, the at least one roller is spiral-shaped and can be wound about the respective support section. Thereby, there is no need for the reticular structure of the retaining cage to have interruptions for the insertion of the roller.

In some embodiments, the at least one roller can be compressed radially and elastically, due to the insertion of the bottle through the axial opening, so that it interferes with the bottle, when inserted into the seat, in order to hold it there. In some embodiments, the plurality of interconnected sections comprises an elastic, i.e. flexible, arm. Preferably, the elastic arm supports the at least one support section in a position projecting into the seat so that the at least one roller is forced to interfere with the bottle, once inserted into the seat, in order to hold it there.

In some embodiments, the bottle holder comprises at least two or three rollers, and the plurality of interconnected sections comprise as many support sections defining respective rotation axes with which said rollers are rotatably associated. The rollers can be advantageously distributed about the insertion axis so as to define the position of the bottle in the seat. Thereby, the interaction between the bottle and the retaining cage during the insertion and removal of the bottle from the seat can be left exclusively to the rollers, thus preventing the bottle from sliding against the retaining cage.

In a preferred example, the plurality of interconnected sections comprises a first support section and a second support section belonging to opposite sides with respect to a plane passing through the insertion axis. Preferably, the first and second support sections respectively define a first rotation axis to which a first roller is rotatably associated and a second rotation axis to which a second roller is rotatably associated.

In some embodiments, the plurality of interconnected sections further comprises a third support section defining a third rotation axis to which a third roller is rotatably associated. Preferably, the first, second and third support sections are angularly spaced apart from one another about the insertion axis so as to have the respective rollers in a suitable position for centring the bottle along the insertion axis. This makes it possible to isostatically define the position of the bottle in the seat.

It is preferred that the position of the first support section and the position of the second support section about the insertion axis are proximal and distal to the anchoring part, respectively. Further preferred is that the first and second support sections extend respectively in a first plane and in a second plane which are transverse to the insertion axis and axially spaced apart from one another so that the first plane precedes the second plane with reference to the direction and orientation of insertion of the bottle into the seat. In some embodiments, the third support section is also distal with respect to the anchoring part and extends in the second plane. These features increase the ease of construction and use of the device, as well as its structural robustness and reliability over time.

In a more preferred example, the plurality of interconnected sections comprises a pair of support sections, which preferably extend in a plane transverse to the insertion axis, and which define respective rotation axes with which respective rollers are rotatably associated. Preferably, the plurality of interconnected sections further comprises an arcuate section, i.e. an arc-shaped section, with respect to which the support sections of said pair are arranged symmetrically. Thereby, the arcuate section, by virtue of the conformation thereof, gives elasticity to the pair of support sections, thus improving the adhesion of the rollers to the bottle.

The features and advantages of the invention will become clearer from the following detailed description of a preferred but not exclusive embodiment thereof illustrated, by way of non-limiting example, with reference to the accompanying drawings in which:
- Figure 1 is a front view of a bottle holder according to an embodiment of the present invention, with relative bottle inserted;
- Figure 2 is a side view of the device of Figure 1, with relative bottle inserted;

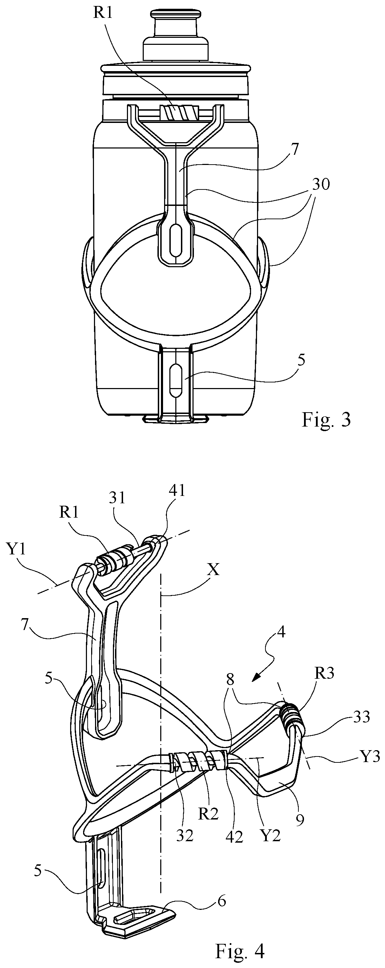

- Figure 3 is a rear view of the device of Figure 1, with relative bottle inserted;
- Figure 4 is a perspective view of the device of Figure 1, without relative bottle inserted.

In the figures, an example of a bottle holder for bicycles made according to the dictates of the present invention is indicated with 1.

The bottle holder 1 defines a seat 2 for receiving a bottle 10 along an insertion axis X that preferably represents a main longitudinal axis of the device 1.

The device 1 comprises a retaining cage 3 defining an axial opening 4 for inserting the bottle into the seat. Preferably, the retaining cage 3 has a reticular structure and preferably includes a plurality of interconnected sections 30. The retaining cage 3 is preferably made of a polymer material capable of giving elasticity to the reticular structure, but can also be made of other material, e.g. metal wire or composite fibre material.

In some embodiments, the device 1 further comprises an anchoring part 5 connected to the retaining cage 3 and configured to fasten the device 1 to a bicycle frame. The anchoring part 5 may have one or more through holes, through which fastening screws can be inserted for screwing into the bicycle frame.

In some embodiments, the device 1 further comprises a bearing base 6 connected to the anchoring part and configured to bear a bottom portion 11 of the bottle, namely at an axial end of the seat 2 opposite the axial opening 4. The reticular structure of the retaining cage 3 preferably extends between the axial opening 4 and the bearing base 6.

The device 1 comprises at least one roller and preferably a plurality of rollers R1, R2, R3 for sliding the bottle into the seat 2 along the insertion axis X through the axial opening 4, to and from the possible bearing base 6. In some embodiments, the rollers are arranged axially opposite the bearing base 6 and preferably project outwards from the seat 2 to facilitate the insertion of the bottle into the seat.

In some embodiments, the retaining cage 4 defines a plurality of rotation axes Y1, Y2, Y3 for as many rollers R1, R2, R3 distributed about the insertion axis X so as to tangentially delimit the axial opening 4. Preferably, the axial opening 4 is defined between the rollers R1, R2, R3.

In some embodiments, each roller R1, R2, R3 is rotatably associated with a respective rotation axis Y1, Y2, Y3 preferably defined by the retaining cage 3, in particular tangentially to the periphery of the axial opening 4, so as to advantageously allow the roller to roll on the bottle as a result of the insertion of the bottle through the axial opening.

In some embodiments, the plurality of interconnected strokes 30 and the rotation axis Y1, Y2, Y3 of each roller are in a single body which, preferably, also integrates the anchoring part 5 and/or the bearing base 6.

In a more preferred example, the plurality of interconnected sections 30 comprises at least one support section and preferably a plurality of support sections 31, 32, 33 extending tangentially to the periphery of the axial opening 4 in respective planes P1, P2 transverse to the insertion axis X. Each support section 31, 32, 33 preferably defines a respective rotation axis Y1, Y2, Y3 at which a respective roller R1, R2, R3 is rotatably associated so as to allow the roller to roll on the bottle during the insertion of the bottle through the axial opening 4. In some embodiments, the support sections 31, 32, 33 have an elongate shape, preferably rectilinear, to define the respective rotation axes Y1, Y2, Y3.

In some embodiments, the plurality of interconnected sections 30 defines a seamless closed-circuit reticular structure, at least at the support sections 31, 32, 33. In order to facilitate the assembly of the rollers, it is therefore preferred that each roller is spiral-shaped and can wrap around the respective support section. Thereby, there is no need for the reticular structure of the retaining cage to have interruptions for the insertion of the roller. Of course, alternative embodiments are also contemplated, e.g. with modular rollers.

To guarantee a better adhesion to the surface of the bottle, it is preferable that the rollers are made of rubber, silicone or another elastically yielding material. In a preferred example, the rollers R1, R2, R3 can be compressed radially and elastically by the insertion of the bottle through the axial opening 4 so as to interfere with the bottle, when inserted into the seat 2, in order to hold it there. In some embodiments, the plurality of interconnected sections 30 therefore comprises at least a first support section 31 and preferably also a second support section 32 and/or a third support section 33 respectively defining a first rotation axis Y1, a second rotation axis Y2 and a third rotation axis Y3 with which a first roller R1, a second roller R2 and a third roller R3 are rotatably associated, respectively.

Preferably, the first, second and third support sections 31, 32, 33 are angularly spaced apart from one another about the insertion axis X so as to have the respective rollers R1, R2, R3 in a position that facilitates centring the bottle along the insertion axis.

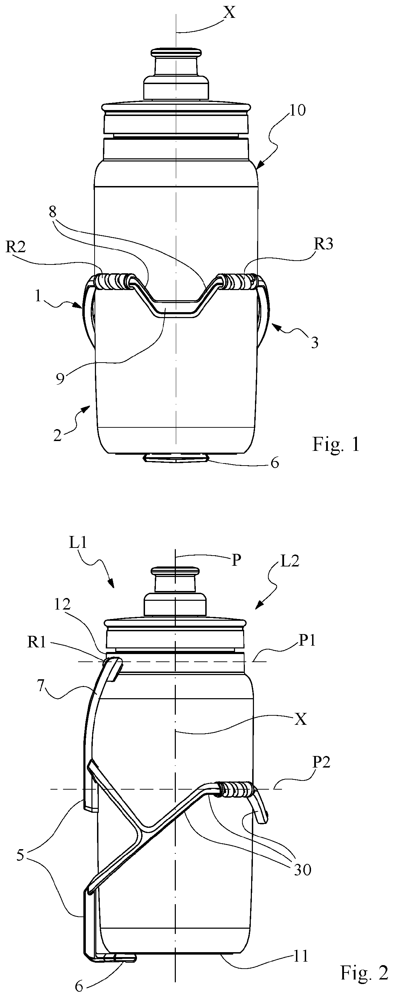

It is preferred that the position of the first support section 31 and the position of the second support section 32 about the insertion axis X are proximal and distal to the anchoring part 5, respectively. Further preferred is that the position of the third support section 33 is also distal with respect to the anchoring part 5. In this respect, with reference to the example of Figure 2, a first and a second side L1, L2 can be defined opposite with respect to a plane P passing through the insertion axis X. The first support section 31 as well as possibly the anchoring part 5 and/or the bearing base 6 preferably belong to the first side L1, while the second and/or third support sections 32, 33 preferably belong to the second side L2.

Again with reference to the example in Figure 2, a first and a second plane P1, P2 can be distinguished which are transverse to the insertion axis X and axially spaced apart so that the first plane P1 precedes the second plane P2 with reference to the direction and orientation of insertion of the bottle into the seat. Preferably, the first support section 31 and the first rotation axis Y1 extend in the first plane P1, while the second and possibly third support sections 32, 33 with the respective rotation axes Y2, Y3 preferably extend in the second plane P2.

In a preferred example, the plurality of interconnected sections 30 comprises an arm 7, for example an elastic arm, which preferably supports the first support section 31 in a position projecting into the seat 2 so as to force the first roller R1 to interfere with the bottle, when inserted into the seat, in order to hold it there. In some embodiments, the elastic arm 7 extends along the insertion direction of the bottle into the seat and supports the first support section 31 in an oscillating manner, with respect to the insertion axis X, from a first to a second position, due to the introduction of the bottle through the axial opening 4, so that in the second position the elastic recall of the elastic arm 7 presses the first roller R1 against the bottle.

In some embodiments, the elastic arm 7 and the bottle 10 are shaped so as to force the first roller R1 in extraction from the seat 2 in contrast to the elastic recall by interference between roller and bottle when the bottle is inserted into the seat. Furthermore, in some embodiments, the elastic arm 7 and the bottle 10 are shaped so as to release the roller to engage a recess 12 of the bottle to hold the bottle in the respective seat when the roller and the recess are in a position of mutual correspondence. The recess 12 intended to cooperate with the first roller R1 preferably comprises a continuous groove obtained along a circumference of the bottle 10.

It is understood that, in some embodiments, the arm 7 supporting the first support section 31 may be substantially rigid. In fact, in some embodiments, the adhesion of the rollers to the bottle can be guaranteed by the elastic yielding of the bottle itself, which compresses when inserted into the seat 2. A suitable bottle for this purpose can be made of plastic, for example.

In some embodiments, the plurality of interconnected sections 30 comprises a pair 8 of support sections for respective rollers (second and third support sections 32, 33 in the illustrated embodiment) and an arcuate section 9 with respect to which the support sections of said pair 8 are preferably adjacent and symmetrically arranged. The arcuate section 9 has an arched shape with a concavity preferably facing opposite with respect to the bearing base 6 so as to offer a lead-in for the insertion of the bottle in an intermediate position between the two support sections of the pair 8.

From the description made, the advantages of the invention are clear, mainly represented by the preservation of the surface integrity of the bottle, but also by the simplicity of construction and use of the bottle holder, as well as its structural robustness and reliability over time.

## Claims

1. Bottle holder (1) for bicycles defining a seat (2) for receiving a bottle along an insertion axis (X), the bottle holder comprising a retaining cage (3) with a reticular structure including a plurality of interconnected sections (30), the retaining cage (3) defining an axial opening (4) for inserting the bottle into the seat, and at least one roller (R1, R2, R3) for sliding the bottle into the seat along the insertion axis through the axial opening, the plurality of interconnected sections comprising at least one support section (31, 32, 33) extending tangentially to the periphery of the axial opening in a respective plane (P1, P2) transverse to the insertion axis, wherein the at least one support section defines a respective rotation axis (Y1, Y2, Y3) at which the at least one roller is rotatably associated, thereby enabling the roller to roll on the bottle due to an interaction between the bottle and the roller during the insertion of the bottle through the axial opening, wherein the retaining cage and the rotation axis of the at least one roller are in a single body.

2. Bottle holder according to claim 1, comprising an anchoring part (5) connected to the retaining cage and configured to fasten the bottle holder to a bicycle frame.

3. Bottle holder according to claim 2, comprising a bearing base (6) connected to the anchoring part and configured to bear a bottom portion of the bottle at an axial end of the seat opposite the axial opening.

4. Bottle holder according to claim 2 or 3, wherein the single body also integrates the anchoring part and/or the bearing base.

5. Bottle holder according to any one of the preceding claims, wherein the at least one support section has a rectilinear elongate shape so as to facilitate rotation of the roller on the respective support section.

6. Bottle holder according to any one of the preceding claims, wherein the at least one support section has a rectilinear elongate shape to define the respective rotation axis.

7. Bottle holder according to any one of the preceding claims, wherein the at least one roller has a radial clearance with respect to the respective support section.

8. Bottle holder according to any one of the preceding claims, wherein the at least one support section comprises at least one shoulder (41, 42) configured to limit the axial displacement of the respective roller.

9. Bottle holder according to claim 8, wherein the at least one support section comprises two shoulders between which the respective roller is positioned.

10. Bottle holder according to any one of the preceding claims, wherein the at least one roller is spiral-shaped and is configured to be wound about the respective support section, and/or wherein the at least one roller (R1, R2, R3) is radially and elastically compressible, as a result of inserting the bottle through the axial opening, so as to interfere with the bottle, once inserted into the seat, in order to hold it there.

11. Bottle holder according to any one of the preceding claims, wherein the plurality of interconnected sections comprises an elastic arm (7), the elastic arm supporting the at least one support section (31) in a position projecting into the seat so as to force the at least one roller (R1) to interfere with the bottle, once inserted into the seat, in order to hold it there.

12. Bottle holder according to any one of the preceding claims, wherein the plurality of interconnected sections comprises a first support section (31) and a second support section (32) belonging to opposing sides (L1, L2) with respect to a plane (P) passing through the insertion axis (X), the first and second support sections respectively defining a first rotation axis (Y1) with which a first roller (R1) is rotatably associated and a second rotation axis (Y2) with which a second roller (R2) is rotatably associated.

13. Bottle holder according to claim 12, wherein the plurality of interconnected sections comprises a third support section (33) defining a third rotation axis (Y3) with which a third roller (R3) is rotatably associated, wherein the first, second and third support sections are angularly spaced apart from one another about the insertion axis so as to arrange the respective rollers in a position configured to centre the bottle along the insertion axis.

14. Bottle holder according to claim 12 or 13 when dependent on Claim 2, 3 or 4, wherein the position of the first support section (31) and the position of the second support section (32) about the insertion axis are respectively proximal and distal with respect to the anchoring part (5), the first and second support sections extending respectively in a first plane (P1) and in a second plane (P2) which are transverse to the insertion axis and axially spaced apart from one another so that the first plane precedes the second plane with reference to the direction and orientation of insertion of the bottle into the seat, wherein preferably also the third support section (33) is distal with respect to the anchoring part and extends in the second plane.

15. Bottle holder according to any one of the preceding claims, comprising at least two rollers, wherein the plurality of interconnected sections comprises a pair (8) of support sections defining respective rotation axes with which respective rollers are rotatably associated, as well as an arcuate section (9) with respect to which the support sections of said pair are arranged symmetrically.
